Europäisches Patentamt

European Patent Office

Office européen des brevets

(19)

(11) **EP 0 841 465 B1**

(12) **FASCICULE DE BREVET EUROPEEN**

(45) Date de publication et mention
de la délivrance du brevet:
**13.08.2003 Bulletin 2003/33**

(51) Int Cl.⁷: **E21B 47/022**, G01C 9/00

(21) Numéro de dépôt: **97402609.8**

(22) Date de dépôt: **03.11.1997**

(54) **Dispositif de mesure de verticalité d'un engin de forage**

Bohrgerätlotmessvorrichtung

Drill verticality measuring device

(84) Etats contractants désignés:
**DE FR IT NL**

(30) Priorité: **06.11.1996 FR 9613507**

(43) Date de publication de la demande:
**13.05.1998 Bulletin 1998/20**

(73) Titulaire: **COMPAGNIE DU SOL**
**92000 Nanterre (FR)**

(72) Inventeurs:
- **Chagnot, Phillippe**
  **77940 La Brosse Montceaux (FR)**
- **Raymont, Thierry Patrice**
  **77130 Montereau (FR)**
- **Levallois, Jacques**
  **92150 Suresnes (FR)**
- **Cano, Joel**
  **33830 Belin (FR)**

(74) Mandataire: **Dronne, Guy et al**
**Cabinet Beau de Loménie**
**158, rue de l'Université**
**75340 Paris Cédex 07 (FR)**

(56) Documents cités:
**DE-B- 1 019 982**     **US-A- 4 214 374**

- **PATENT ABSTRACTS OF JAPAN vol. 096, no. 006, 28 juin 1996 & JP 08 043094 A (HAZAMA GUMI LTD), 16 février 1996,**
- **PATENT ABSTRACTS OF JAPAN vol. 096, no. 006, 28 juin 1996 & JP 08 029167 A (SATO KOGYO CO LTD), 2 février 1996,**
- **PATENT ABSTRACTS OF JAPAN vol. 096, no. 005, 31 mai 1996 & JP 08 014894 A (TONE CHIKA GIJUTSU KK;OTHERS: 02), 19 janvier 1996,**

## Description

La présente invention a pour objet un dispositif de mesure de la verticalité du déplacement d'un engin de forage.

De façon plus précise, l'invention concerne un dispositif qui permet en continu de mesurer les éventuels écarts par rapport à la verticale d'un engin de forage destiné à creuser des tranchées de grandes profondeurs et de largeur réduite, typiquement égale à la largeur de l'engin.

De tels engins sont notamment mais non exclusivement des foreuses à tambours rotatifs. Ils sont notamment décrits dans le brevet français 2 211 027. L'engin de forage est suspendu à un engin de levage par l'intermédiaire de câbles. L'engin poursuit un mouvement de descente au fur et à mesure que ses tambours rotatifs creusent la tranchée.

Pour certains travaux, la tranchée peut présenter une grande profondeur qui peut atteindre 100 mètres ou plus. De plus, il est en général nécessaire que cette tranchée présente une grande précision quant à sa verticalité notamment du fait que la tranchée finale résulte d'une juxtaposition de forages verticaux. La précision requise peut être de l'ordre de 1 mm selon la direction horizontale par mètre de profondeur de tranchée.

En raison notamment des irrégularités du terrain dans lequel la tranchée doit être réalisée, il existe des risques importants que l'engin de forage dévie de sa trajectoire verticale, ce risque augmentant au fur et à mesure que la profondeur de forage augmente.

Il existe donc un réel besoin de disposer de systèmes permettant de contrôler la verticalité du déplacement de l'engin en détectant d'éventuels écarts par rapport à la trajectoire verticale souhaitée.

Pour résoudre ce problème, on a déjà proposé d'équiper le châssis de l'engin de forage de deux inclinomètres. Ils indiquent chacun les inclinaisons du châssis suivant deux axes perpendiculaires. On peut connaître alors l'inclinaison de l'outil de forage et un profil de forage calculé par intégration des angles en fonction de la profondeur.

Ces systèmes présentent un certain nombre d'inconvénients. D'une part, ils nécessitent l'intégration des mesures successives effectuées, ce qui risque d'entraîner des erreurs cumulatives, puisque chaque mesure dépend des mesures précédentes. D'autre part, ces systèmes permettent de contrôler la verticalité de l'engin de forage et donc de la tranchée mais ils ne permettent pas de détecter un éventuel mouvement de vrillage de l'engin, c'est-à-dire un mouvement de rotation de l'engin autour de son axe vertical. Ils ne permettent pas davantage de détecter un mouvement en "crabe" de l'engin, c'est-à-dire un déplacement de celui-ci par rapport à la verticale dans le plan médian de la tranchée à réaliser. En effet, dans ces deux cas, l'axe longitudinal de l'engin reste globalement vertical et les inclinomètres ne détectent aucun écart. Or, ces deux mouvements entraînent également des erreurs dans la géométrie globale de la tranchée résultant des forages successifs juxtaposés.

On comprend qu'il est important de pouvoir détecter rapidement les éventuelles erreurs de positionnement de l'engin par rapport à la verticale ou par rapport au plan médian de la tranchée à réaliser afin de pouvoir modifier rapidement son orientation si cela est nécessaire et de vérifier l'effet de cette modification d'orientation.

Les documents JP 08 043094A et JP 08 014894A décrivent des dispositifs de mesure de verticalité du déplacement d'un engin de forage destiné à creuser une tranchée verticale à partir de la surface du sol. Cette mesure utilise les câbles auxquels l'engin de forage est suspendu, mais elle ne permet pas de résoudre tous les problèmes énoncés ci-dessus.

Un objet de l'invention est de fournir un dispositif de mesure en continu de la verticalité d'un engin de forage qui permette en outre de détecter un mouvement de vrillage ou un déplacement en "crabe" de celui-ci.

Pour atteindre ce but, selon l'invention, le dispositif de mesure de la verticalité du déplacement d'un engin de forage destiné à creuser une tranchée verticale à partir de la surface du sol, ledit engin comportant une extrémité supérieure solidaire de moyens de supportage de l'engin lors de sa descente, une extrémité inférieure et un axe vertical, se caractérise en ce qu'il comprend :

.   deux câbles de faible section, chaque câble présentant une première extrémité fixée à l'extrémité supérieure de l'engin, les deux points de fixation étant distincts,

.   des moyens de maintien desdits câbles sous tension,

.   deux moyens de guidage disposés au dessus de la surface du sol maintenant immobile dans un plan horizontal la zone de chaque câble disposée dans ledit plan au fur et à mesure de la descente de l'engin, au moins aux instants de mesure, lesdits moyens de guidage définissant deux points fixes en relation spatiale avec lesdits points de fixation lorsqu'ils sont dans ledit plan horizontal,

.   des moyens de mesure selon deux directions, horizontales et orthogonales entre elles, les angles d'inclinaison de la portion de chaque câble s'étendant entre lesdits points de fixation et lesdits moyens de guidage,

.   des moyens de mesure de la longueur des portions de câble s'étendant entre les points de fixation et les moyens de guidage au fur et à mesure de la descente de l'engin ;

.   des moyens solidaires dudit engin de mesure des angles d'inclinaison de l'axe longitudinal dudit engin selon les deux directions, horizontales et orthogonales entre elles; et

des moyens de traitement comprenant des moyens de calcul du déplacement des deux points de fixation des câbles selon lesdites directions orthogonales à partir desdites mesures de longueur et desdites mesures d'angles d'inclinaison et de calcul des déplacements de deux points distincts fixes -de l'extrémité inférieure dudit engin à partir du calcul des déplacements des points de fixation des deux câbles et de la mesure des deux angles d'inclinaison de l'axe vertical de l'engin.

On comprend que, grâce à la mesure en continu de la longueur des câbles entre l'extrémité supérieure de l'engin et les moyens fixes de guidage, et à la mesure des deux angles d'inclinaison des extrémités des câbles fixées sur l'engin, on peut en continu calculer les coordonnées des deux points de fixation des câbles et donc leurs éventuels écarts de position par rapport aux positions de références définies à partir des deux moyens de guidage fixes.

On comprend également que, grâce à l'inclinomètre solidaire du châssis de l'engin, on peut déterminer en continu les éventuels écarts de position de deux points de l'extrémité inférieure de l'engin de forage, ces points pouvant correspondre dans le cas d'une foreuse à tambours rotatifs, aux zones d'attaque des tambours. Cette disposition est particulièrement intéressante lorsque l'engin de forage comporte un châssis de grande hauteur. Elle permet en outre de déterminer très rapidement l'effet des corrections apportées à la direction d'enfoncement de l'engin de forage.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées sur lesquelles :

- la figure 1 est une vue de côté d'un engin de forage équipé du dispositif de mesure de verticalité ;
- la figure 2 est une vue de face d'un engin de forage équipé du dispositif de mesure de verticalité ;
- la figure 3 est une vue partielle du dispositif de mesure montrant la fixation de l'extrémité d'un câble sur l'engin de forage ;
- la figure 4 est une vue partielle du dispositif de mesure de verticalité montrant la mise en place des guides de câbles ;
- la figure 5 est un schéma illustrant la détermination des déplacements par rapport à la verticale de deux points de l'engin de forage ;
- la figure 6 est un schéma en perspective montrant la détermination des angles d'inclinaison ;
- la figure 7 illustre un mode complet de réalisation du dispositif de mesure de verticalité pour ce qui est des organes montés sur l'engin de forage; et
- la figure 8 est un schéma illustrant le traitement des signaux utilisés dans le dispositif de mesure de verticalité.

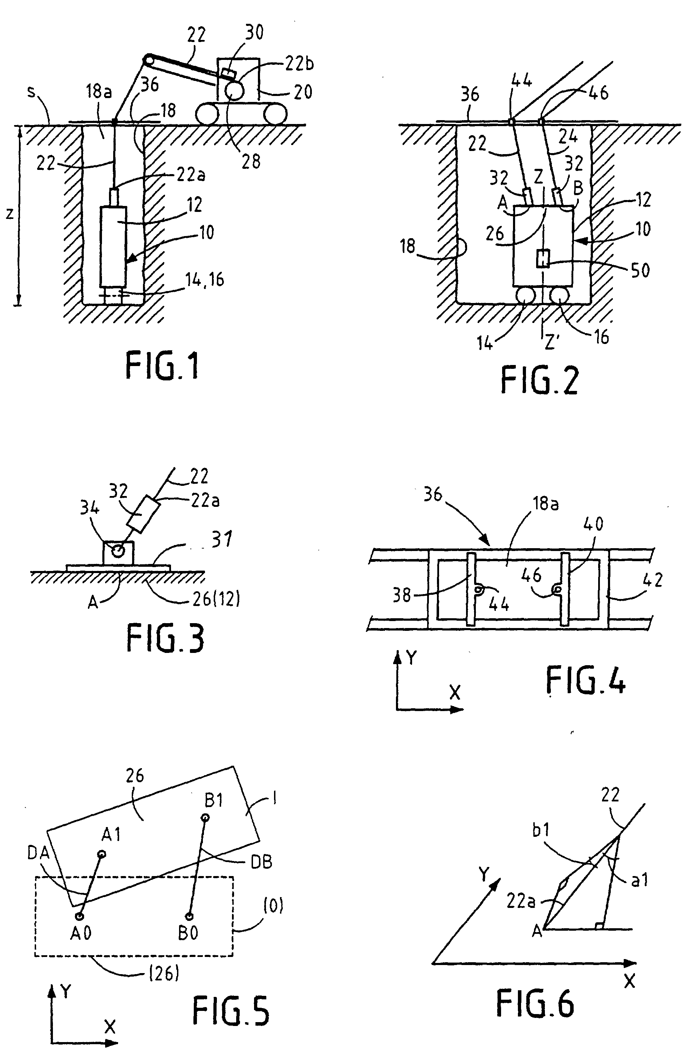

En se référant tout d'abord aux figures 1 et 2, on va décrire le principe du dispositif de mesure de verticalité monté sur un engin de forage.

Sur ces figures, on a représenté un engin de forage 10 qui est par exemple du type fraise à tambours rotatifs. Cet engin comprend essentiellement un châssis 12 et deux tambours rotatifs 14 et 16. L'engin est représenté dans la tranchée 18 qu'il est en train de creuser. L'engin 10 est suspendu par un système de moufle non représenté à une machine de levage 20.

Selon l'invention, deux câbles 22 et 24 ont leur première extrémité 22a et 24b respectivement fixée en deux points distincts A et B de l'extrémité supérieure 26 du châssis 12 de l'engin de forage. Ces câbles 22 et 24 ont une faible section pour ne présenter qu'une raideur réduite. Cela ne présente aucun inconvénient puisqu'ils ne supportent pas l'engin de forage. Dans la suite de la description, ces câbles seront appelés cablettes. De préférence, les points A et B sont disposés dans le plan médian du châssis de l'engin de forage selon sa largeur, c'est-à-dire selon la direction de sa plus grande dimension en section horizontale.

L'autre extrémité de chaque cablette 22b, 24b est montée sur un tambour 28 porté par la machine de levage 20. Ces tambours sont équipés de système permettant de maintenir les cablettes 22 et 24 sous tension, au fur et à mesure de la descente de l'engin de forage. De plus, il est prévu pour chaque cablette un dispositif 30 de mesure de la longueur de cablette déroulée au fur et à mesure de la descente de l'engin de forage. On peut ainsi connaître en permanence la cote z des tambours 14 et 16 de l'engin de forage par rapport à la surface du sol S dans lequel on creuse la tranchée 18.

Il est important d'observer que les cablettes sont entièrement disposées au dessus de l'engin de forage. De plus, la distance entre les points de fixation A et B des cablettes doit être suffisante pour permettre une mesure précise des déplacements. Cependant, cette distance 1 doit être sensiblement inférieure à la largeur 1 de l'engin de telle manière que la direction des cablettes ne risque pas d'être affectée par la paroi de la tranchée en cas d'erreur de verticalité de l'engin.

La figure 3 montre plus en détails le mode préféré de fixation de l'extrémité 22a de la cablette 22 sur l'extrémité supérieure 26 de l'engin de forage. Le dispositif de fixation comprend une plaque inférieure 31 solidaire de l'extrémité supérieure 26 et fixée au point A. Cette plaque 31 est reliée à un inclinomètre 32 par l'intermédiaire d'un système rotulant 34 qui est de préférence un joint de cardan. L'inclinomètre est solidaire de l'extrémité 22a de la cablette 22. Grâce à la présence du joint de cardan 34, les indications fournies par l'inclinomètre 32 correspondent effectivement à l'inclinaison de la partie terminale de la cablette 22 sans que ces indications soient perturbées par un vrillage de la cablette ou par la raideur de la cablette dans sa zone de fixation.

Sur les figures 1 et 2, on a également représenté un système 36 de guidage des cablettes 22 et 24. Ce système de guidage est disposé dans un plan horizontal correspondant à l'extrémité supérieure 18a de la tranchée.

La figure 4 montre plus en détails le système de guidage 36. Il est constitué, de préférence, par deux traverses escamotables 38 et 40 qui peuvent être fixées sur le guide de pré-saignée 42. Chaque traverse 38 et 40 présente en son centre un anneau de guidage 44 et 46 respectivement des cablettes 22 et 24. On pourrait utiliser d'autres formes de guidage à condition qu'elles fournissent une position de référence précise des cablettes. Les cablettes 22 et 24 passent dans ces anneaux 44 et 46. Durant toute l'opération de forage les traverses 38 et 40 sont fixées. Ainsi, dans le plan horizontal défini par les traverses 38 et 40, les cablettes sont "immobiles" dans ce plan horizontal, leurs positions étant imposées par les anneaux 44 et 46. La position des anneaux 44 et 46 coïncide, par exemple, avec celle des points de fixation A et B lorsque l'extrémité supérieure de l'engin de forage est sensiblement dans ce même plan. Les anneaux 44 et 46 définissent ainsi deux points de référence Ao et Bo.

On comprend que, grâce au système de guidage 36 des cablettes, les points de référence Ao et Bo ne dépendent pas des éventuels mouvements de la machine de levage 20.

On voit également que pour déterminer les erreurs de position de la partie supérieure de l'engin de forage, il faut mesurer les éventuels déplacements, en projection dans un plan horizontal, des points de fixation A et B des cablettes 22 et 24 par rapport aux points de référence Ao et Bo. Selon l'invention, la détermination des valeurs de ces déplacements selon deux directions orthogonales horizontales X et Y est élaborée à partir de la mesure de la cote Z de l'engin de forage et des indications d'angles d'inclinaison a1, b1, a2, b2 données par les inclinomètres 32 associés à chaque cablette. On comprend en effet que ces déplacements selon X et Y sont aisément calculables à partir de ces deux types de grandeurs.

Sur la figure 6, on a représenté en perspective de façon simplifiée l'extrémité inférieure 22a de la cablette 22 et on a représenté par a1 et b1 les deux angles déterminés par l'inclinomètre 32, c'est-à-dire les angles que fait la cablette avec les axes orthogonaux X, Y du plan horizontal. On comprend que X correspond à la direction dans laquelle la tranchée globale doit être creusée, alors que Y est dirigé dans le sens de l'épaisseur ou de la largeur de cette tranchée.

Sur la figure 5, on a représenté en pointillés les éléments de guidage qui définissent les positions de référence Ao et Bo et une position I de l'extrémité supérieure 26 de l'engin de forage. Dans cette position correspondant à une certaine cote Z, cette extrémité supérieure occupe la position représentée en traits pleins sur la figure 5. Les points A et B occupent dans l'espace les positions A1 et B1. La mesure du défaut de verticalité ou de positionnement de l'organe de forage correspond donc pour cette position de l'organe de l'engin de forage aux déplacements $D_A$ et $D_B$ représentés sur ces figures. Plus simplement, ces déplacements $D_A$ et $D_B$ peuvent être exprimés à l'aide de leurs composantes sur les axes horizontaux X et Y que l'on appellera $D_{AX}$ et $D_{BX}$, pour la composante X, et $D_{AY}$ et $D_{BY}$, pour la composante Y. A partir des déplacements de ces points A et B, on peut bien sûr en déduire toutes les erreurs de position de l'extrémité supérieure de l'engin de forage.

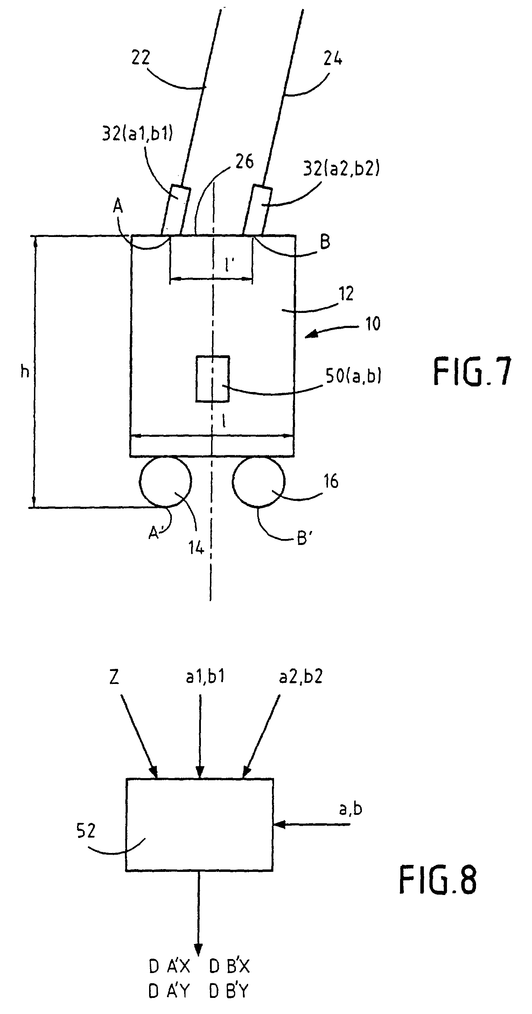

On comprend qu'en fait, ce sont les déviations de l'extrémité inférieure de l'engin de forage qu'il est intéressant de détecter afin de les corriger. Pour cela, la figure 7 illustre un mode de réalisation de l'invention. Selon ce mode complet de réalisation, le châssis 12 de l'engin de forage est équipé de plus d'un inclinomètre 50. Cet inclinomètre permet donc de mesurer en permanence les angles d'inclinaison a et b de l'axe longitudinal Z, Z' du châssis selon les deux directions orthogonales horizontales X et Y, cet axe longitudinal étant "normalement" vertical. Les angles a et b sont définis de la même manière que les angles a1, b1 ou a2, b2. Il va de soi que les inclinomètres 32 et 50 sont équipés de câbles électriques ou de moyens de transmission convenables pour remonter les informations avec les circuits de traitement dont est équipée la machine de levage.

On comprend qu'à partir du calcul déjà explicité des déplacements des points A et B et des angles d'inclinaison a et b détectés par l'inclinomètre 50, il est possible de calculer les déviations des points inférieurs A' et B' de l'engin de forage, ces points A' et B' correspondant par exemple aux zones d'attaque des tambours rotatifs de la fraise. Les déviations éventuelles des points A' et B' peuvent se calculer à partir des formules approchées suivantes, dans lesquelles h représente la hauteur de l'engin de forage :

$$D_{A'X} = a1\,(Z\text{-}h) + ah$$

$$D_{A'Y} = b1\,(Z\text{-}h) + bh$$

$$D_{B'X} = a2\,(Z\text{-}h) + ah$$

$$D_{B'Y} = b2\,(Z\text{-}h) + bh.$$

Ces formules approchées supposent que les points A et B, dans la position initiale de l'engin de forage, coïncident avec les points de référence fixes Ao et Bo. Dans le cas contraire, il faut tenir compte des écarts initiaux.

Sur la figure 8, on a illustré très schématiquement le traitement mathématique des informations délivrées par les différents capteurs et permettant de calculer les déviations des points inférieurs A' et B' de l'engin de forage. Le circuit de calcul 52 reçoit en permanence du détecteur 30 des informations dont le traitement permet de déterminer la cote z de l'extrémité inférieure de l'engin de forage dans la position considérée. Le circuit de calcul 52 reçoit également des inclinomètres 32 associés à chaque cablette 22 et 24, les valeurs mesurées des angles a1 et b1 et a2 et b2. Enfin, le circuit de traitement 52 reçoit les angles d'inclinaison a et b délivrés par l'inclinomètre 50 solidaire de l'engin de forage. On comprend qu'ainsi le circuit de calcul 52 permet d'élaborer en permanence les informations de déplacements ou déviations par rapport à la verticale des points A' et B' de l'engin de forage ainsi que l'effet de vrillage éventuel qui correspond à l'angle que font les segments Ao, Bo et A1, B1 de la figure 5.

Dans la description précédente, on a plus particulièrement considéré le cas d'une fraise à tambours rotatifs, c'est-à-dire le cas d'un engin de forage qui s'enfonce continûment dans la tranchée au fur et à mesure du creusement de celle-ci.

On sait cependant qu'il existe d'autres engins de forage qui sont du type à benne preneuse. Dans ce cas, il est bien sûr nécessaire de remonter la benne à la surface à chaque fois que ses godets sont remplis de déblais. Il n'est donc plus possible de mettre en place à la surface du sol les moyens de guidage 36 définissant les points de référence Ao et Bo. Dans ce cas, les points Ao et Bo des cablettes seront définis à partir de la machine de levage 20 à laquelle est suspendu l'engin de forage, de telle manière que ces points Ao et Bo puissent être considérés comme fixes. Ces points de référence seront alors en général disposés dans un plan horizontal sensiblement au dessus de niveau du sol.

**Revendications**

1. Dispositif de mesure de la verticalité du déplacement d'un engin de forage destiné à creuser une tranchée verticale à partir de la surface du sol, ledit engin comportant une extrémité supérieure solidaire de moyens de supportage de l'engin lors de sa descente, une extrémité inférieure et un axe longitudinal vertical,
ledit dispositif comprenant :

   . deux câbles de faible section (24, 22), chaque câble présentant une première extrémité fixée à l'extrémité supérieure (26) de l'engin (10), les deux points de fixation étant distincts,
   . des moyens de maintien desdits câbles sous tension,
   . deux moyens de guidage (44, 46) disposés au dessus de la surface du sol maintenant immobile dans un plan horizontal la zone de chaque câble disposée dans ledit plan au fur et à mesure de la descente de l'engin, au moins aux instants de mesure, lesdits moyens de guidage définissant deux points fixes de référence en relation spatiale avec lesdits points de fixation lorsqu'ils sont dans ledit plan horizontal,

   . des moyens (32) de mesure selon deux directions, horizontales et orthogonales entre elles, des angles d'inclinaison de la portion de chaque câble s'étendant entre lesdits points de fixation et lesdits moyens de guidage,

   . des moyens (30) de mesure de la longueur des portions de câble s'étendant entre les points de fixation et les moyens de guidage au fur et à mesure de la descente de l'engin ;

   . des moyens (50) solidaires dudit engin (10) de mesure des angles d'inclinaison de l'axe longitudinal dudit engin selon les deux directions horizontales et orthogonales entre elles; et

   . des moyens de traitement (52) comprenant des moyens de calcul du déplacement des deux points de fixation des câbles selon lesdites directions orthogonales à partir desdites mesures de longueur et desdites mesures d'angles d'inclinaison et de calcul des déplacements de deux points distincts fixes de l'extrémité inférieure dudit engin à partir du calcul des déplacements des points de fixation de deux câbles et de la mesure des deux angles d'inclinaison de l'axe vertical de l'engin.

2. Dispositif de mesure selon la revendication 1, **caractérisé en ce que** lesdites premières extrémités desdits câbles sont respectivement fixées sur l'extrémité supérieure de l'engin par l'intermédiaire de systèmes rotulants (34).

3. Dispositif de mesure selon la revendication 2, **caractérisé en ce que** chaque système rotulant est constitué par un joint de cardan (34).

4. Dispositif de mesure selon l'une quelconque des revendications 2 et 3, **caractérisé en ce que** chaque moyen de mesure d'angle d'inclinaison comprend un inclinomètre monté entre ledit système rotulant et la première extrémité d'un câble.

5. Dispositif de mesure selon l'une quelconque des revendications 1 à 4, **caractérisé en ce que** lesdits deux moyens de guidage pour définir deux positions fixes de référence des câbles comprennent deux moyens fixes de guidage (38, 40, 44, 46) dans lesquels passent lesdits câbles (22, 24) et disposés à la surface du sol dans un plan horizontal en regard de ladite tranchée (18).

**Patentansprüche**

1. Messvorrichtung der Vertikalität der Versetzung eines Bohrgeräts, das dazu vorgesehen ist, ausgehend von der Bodenoberfläche einen vertikalen Einstich zu bohren, wobei das besagte Gerät ein oberes Ende aufweist, das mit Mitteln zur Stützung des Geräts während seines Niederfahrens verbunden ist, ein unteres Ende und eine vertikale longitudinale Achse,

die besagte Vorrichtung umfassend:

- zwei Kabel von geringem Querschnitt (24,22), wobei jedes Kabel ein an dem oberen Ende (26) des Geräts (10) befestigtes erstes Ende aufweist, wobei die zwei Befestigungspunkte voneinander getrennt sind,
- Mittel, um besagte Kabel unter Spannung zu halten
- zwei Mittel zur Führung (44, 46), die oberhalb der Bodenoberfläche angeordnet sind und in einer horizontalen Ebene den Bereich jedes Kabels ortsgebunden halten, der in der besagten Ebene angeordnet ist, entsprechend dem Niederfahren des Geräts, zumindest in den Augenblicken der Messung, wobei die besagten Mittel zur Führung zwei ortsgebundene Referenzpunkte in räumlicher Beziehung mit den besagten Befestigungspunkten definieren, wenn sie in der besagten horizontalen Ebene sind,
- Mittel (32) zur Messung, bezüglich zweier horizontaler und orthogonal zueinander verlaufender Richtungen, der Inklinationswinkel des Bereichs jedes Kabels, der sich zwischen den besagten Befestigungspunkten und den besagten Mitteln zur Führung erstreckt,
- Mittel (30) zur Messung der Länge der Kabelbereiche, die sich zwischen den Befestigungspunkten und den Mitteln zur Führung entsprechend dem Niederfahren des Geräts erstrekken;
- Mittel (50), verbunden mit besagtem Gerät (10), zur Messung der Inklinationswinkel der longitudinalen Achse des besagten Geräts bezüglich der zwei horizontalen und orthogonal zueinander verlaufenden Richtungen; und
- Mittel zur Auswertung (52), die Mittel zur Berechnung der Versetzung der zwei Befestigungspunkte der Kabel bezüglich der besagten orthogonalen Richtungen umfassen, auf der Grundlage von besagten Messungen der Länge und besagten Messungen der Inklinationswinkel und der Berechnung der Versetzungen der zwei getrennten ortsgebundenen Punkte des unteren Endes des besagten Geräts, auf der Grundlage der Berechnung der Versetzungen der Befestigungspunkte der zwei Kabel und der Messung der zwei Inklinationswinkel der vertikalen Achse des Geräts.

2. Messvorrichtung nach Anspruch 1,
     **dadurch gekennzeichnet,**
**dass** die besagten ersten Enden der besagten Kabel jeweils auf dem oberen Ende des Geräts durch die Vermittlung von kugelgelenkartigen Systemen (34) befestigt sind.

3. Messvorrichtung nach Anspruch 2,
     **dadurch gekennzeichnet,**
**dass** jedes kugelgelenkartige System durch eine Kardanverbindung (34) gebildet ist.

4. Messvorrichtung nach einem der Ansprüche 2 und 3,
     **dadurch gekennzeichnet,**
**dass** jedes Mittel zur Messung des Inklinationswinkels einen Neigungsmesser umfasst, der zwischen dem besagten kugelgelenkartigen System und dem ersten Ende eines Kabels angeordnet ist.

5. Messvorrichtung nach einem der Ansprüche 1 bis 4,
     **dadurch gekennzeichnet,**
**dass** die besagten zwei Mittel zur Führung, um zwei ortsgebundene Referenzpositionen der Kabel zu definieren, zwei ortsgebundene Mittel zur Führung (38, 40, 44, 46) umfassen, durch die die besagten Kabel (22, 24) hindurchlaufen, und die auf der Bodenoberfläche in einer in Hinsicht auf den besagten Einstich (18) horizontalen Ebene angeordnet sind.

## Claims

1. Device for measuring the verticality of the movement of a drilling rig intended to cut a vertical trench from the surface of the ground, the said rig comprising an upper end secured to means supporting the rig as it is lowered, a lower end and a vertical longitudinal axis,

the said device comprising:

- two small-section cables (24, 22), each cable having a first end fixed to the upper end (26) of the rig (10), the two fixing points being distinct,
- means for keeping the said cables tensioned,
- two guide means (44, 46) arranged above the surface of the ground, keeping the region of each cable arranged in a horizontal plane immobile in that plane as the rig is lowered, at least at the measurement instants, the said guide means defining two fixed points of reference in spatial relation with the said fixing points when they are in the said horizontal plane,
- means (32) for measuring, in two mutually orthogonal horizontal directions, the angles of inclination of the portion of each cable stretching between the said fixing points and the said guide means,

- means (30) for measuring the length of the portions of cable stretching between the fixing points and the guide means as the rig is lowered;
- means (50) secured to the said rig (10) for measuring the angles of inclination of the longitudinal axis of the said rig in the two mutually orthogonal horizontal directions; and
- processing means (52) comprising means for calculating the movement of the two fixing points of the cables in the said orthogonal directions from the said length measurements and the said inclination-angle measurements and for calculating the movements of two distinct fixed points of the lower end of the said rig from the calculation of the movements of the fixing points of two cables and the measurement of the two angles of inclination of the vertical axis of the rig.

2. Measuring device according to Claim 1, **characterised in that** the said first ends of the said cables are each fixed to the upper end of the rig by means of swivelling systems (34).

3. Measuring device according to Claim 2, **characterized in that** each swivelling system consists of a cordon joint (34).

4. Measuring device according to either one of Claims 2 and 3, **characterized in that** each means for measuring an angle of inclination comprises an inclinometer mounted between the said swivelling system and the first end of a cable.

5. Measuring device according to any one of Claims 1 to 4, **characterized in that** the said two guide means for defining two fixed reference positions of the cables comprise two fixed guide means (38, 40, 44, 46) through which the said cables (22, 24) pass and which are arranged at the surface of the ground in a horizontal plane facing the said trench (18).

FIG.1

FIG.2

FIG.3

FIG.4

FIG.5

FIG.6

8

22

24

32(a1,b1)

26

32(a2,b2)

A

B

l'

12

10

h

50(a,b)

l

16

A'

14

B'

# FIG.7

Z

a1,b1

a2,b2

a,b

52

D A'X    D B'X
D A'Y    D B'Y

# FIG.8

9